# EUROPÄISCHE PATENTANMELDUNG

(11) **EP 0 683 338 A1**
(43) Veröffentlichungstag der Anmeldung: **22.11.1995**
(21) Anmeldenummer: 95106752.9
(22) Anmeldetag: 04.05.1995
(51) Int. Cl.: F16J 15/34, F16J 15/40

(54) **Wellenabdichtungssystem**

(30) Priorität: 17.05.1994 DE 4417239
(71) Anmelder: SIEMENS AKTIENGESELLSCHAFT, D-80333 München (DE)
(72) Erfinder: Preusse, Bernd, Dipl.-Ing., D-90547 Stein (DE); Steinberg, Christoph, Dipl.-Inf. (FH), D-90522 Oberasbach (DE)

(57) **Zusammenfassung**

Die Erfindung betrifft ein Wellenabdichtungssystem für ein ölgeschmiertes Wellenlager (2) in einem nach außen abgeschlossenen, von Flüssigkeitsdunst erfüllten ruhenden Gehäuse, wobei in dem Wellenlager (2), das durch eine Dichtungsanordnung (4) abgedichtet ist, eine in das Gehäuse ragende Welle (3) drehbar gelagert ist. Eine nochmals verbesserte, insbesondere. von einer Fremdluftzufuhr unabhängige Abdichtung des ölgeschmierten Wellenlagers (2) wird dadurch erreicht, daß an der dem Gehäuse abgewandten Seite der Dichtungsanordnung (4) ein Gegendrucklüfter (6), der durch Ansaugen von Außenluft einen gegen die Dichtungsanordnung (4) gerichteten Staudruck erzeugt, verdrehfest auf der Welle (3) gehalten ist und daß die Dichtungsanordnung (4) einen mit dem Gegendrucklüfter (6) korrespondierenden Strömungskanal (7) aufweist.

## Beschreibung

Die Erfindung betrifft ein Wellenabdichtungssystem für ein ölgeschmiertes Wellenlager in einem nach außen abgeschlossenen, von Flüssigkeitsdunst erfüllten ruhenden Gehäuse, wobei in dem Wellenlager, das durch eine Dichtungsanordnung abgedichtet ist, eine in das Gehäuse ragende Welle drehbar gelagert ist.

Ein derartiges Wellenabdichtungssystem ist z.B. durch die EP-A-0 317 867 oder durch die EP-A-0 476 476 bekannt. In den bekannten Fällen umfaßt das Wellenabdichtungssystem jeweils eine Labyrinthdichtungsanordnung. Labyrinthdichtungsanordnungen werden insbesondere zur Abdichtung von Wellen, die von einem Antriebsmotor mit hoher Drehzahl angetrieben werden, verwendet. Bei solchen Antriebsmotoren handelt es sich z.B. um elektrische Fahrmotoren, die über ein Getriebe die Räder von Fahrzeugen antreiben und die durch ein Lüfteraggregat fremdgekühlt werden.

Um über eine möglichst lange Betriebszeit möglichst wenig Flüssigkeit in Form von Flüssigkeitsdunst aus dem Gehäuse, in dem das ölgeschmierte Wellenlager gehalten ist, austreten zu lassen, weist bei der Labyrinthdichtungsanordnung gemäß der EP-A-0 317 867 oder der EP-A-0 476 476 jeder Flüssigkeitsrücklaufkanal einen unabhängig von wechselnden Druckverhältnissen beiderseits der Labyrinthdichtung ständig mit Flüssigkeit gefüllten, siphonartigen Flüssigkeitssammelabschnitt auf, so daß durch die Flüssigkeit der Flüssigkeitsrücklaufkanal nach beiden Seiten dunstdicht abgesperrt ist.

Durch die DE-U-18 71 828 ist ein Wellenabdichtsystem bekannt, das eine Rückförderschnecke und ein schleifendes Dichtelement umfaßt. Die Rückförderschnecke mit ihrem Gehäuse und das schleifende Dichtelement sind hierbei radial übereinanderliegend angeordnet, wobei das Dichtelement einem feststehenden Teil zugeordnet ist und die Gegendichtfläche von einem umlaufenden Teil gebildet wird, das sich mit steigender Drehzahl in radialer Richtung dehnt. Mit steigender Drehzahl vergrößert sich der Dichtspalt zwischen dem feststehenden und dem umlaufenden Teil und es tritt noch mehr Schmieröl aus. Dem weiteren Austritt von Schmieröl aus dem Lagereinbauraum soll nunmehr durch eine Rückförderschnecke entgegengewirkt werden. Eine Rückführung des Schmieröls in den Lagereinbauraum ist jedoch nicht möglich. Der Austritt von Öldunst kann durch die Rückförderschnecke ebenfalls nicht verhindert werden. Auch durch eine in Richtung Lagereinbauraum strömende Sperrluft ist keine Rückförderung von bereits ausgetretenem Schmieröl möglich. Bei einem zu hohen Sperrluftdruck wird die Lagerschmierung beeinträchtigt oder sogar ganz aufgehoben.

In der US-A-2 188 856 ist eine Schleuderscheibe für aus einem Lager austretendes Öl oder für austretenden Öldunst beschrieben. Die Schleuderscheibe umfaßt wenigstens zwei miteinander fest verbundene Scheiben und ist in einem abgeschlossenen Raum zwischen Lager und Dichtung angeordnet. Das aus dem Lager austretende Öl und der austretende Öldunst sammeln sich in dem abgeschlossenen Raum und werden von der Schleuderscheibe verwirbelt. Eine Rückführung des Öls in das Lager ist auch bei dieser Anordnung nicht möglich.

Bei einer weiteren Ausführungsform ist die Schleuderscheibe hinter der Lagerdichtringanordnung und damit außerhalb des Lagergehäuses angeordnet. Die Schleuderscheibe dient in diesem Fall nur dazu, ein Eindringen von festen oder flüssigen Fremdstoffen in das Lagergehäuse zu verhindern.

Weiterhin ist durch die DE-C-930 961 ein Wellenabdichtsystem bekannt, das einen feststehenden Dichtungsträger und einen sich drehenden Spritzring zwischen Dichtungsträger und Welle umfaßt. Der Spritzring trägt wenigstens eine Schleuderscheibe, durch die das aus dem Lager austretende Öl in eine vom Dichtungsträger gebildete Ölsammelrinne geschleudert wird. Das gesammelte Öl wird über eine Ableitung abgeführt.

Aufgabe der vorliegenden Erfindung ist es, ein Wellenabdichtungssystem zu schaffen, das eine nochmals verbesserte, insbesondere von einer Fremdluftzufuhr unabhängige Abdichtung des ölgeschmierten Wellenlagers gewährleistet.

Die Lösung dieser Aufgabe wird gemäß dem kennzeichnenden Teil des Anspruchs 1 in Verbindung mit den Merkmalen des Oberbegriffs dadurch erreicht, daß an der dem Gehäuse abgewandten Seite der Dichtungsanordnung ein Gegendrucklüfter, der einen gegen die Dichtungsanordnung gerichteten Staudruck erzeugt, verdrehfest auf der Welle gehalten ist und daß die Dichtungsanordnung einen mit dem Gegendrucklüfter korrespondierenden Strömungskanal aufweist.

Bei dem erfindungsgemäßen Wellenabdichtungssystem, dessen Dichtungsanordnung vorzugsweise als Labyrinthdichtung ausgebildet ist, erzeugt der Gegendrucklüfter einen Staudruck, der dem Überdruck im ruhenden Gehäuse entgegengerichtet ist. Dadurch ist auch bei reduzierter oder fehlender Fremdluftzufuhr eine sichere Abdichtung des ölgeschmierten Wellenlagers gewährleistet.

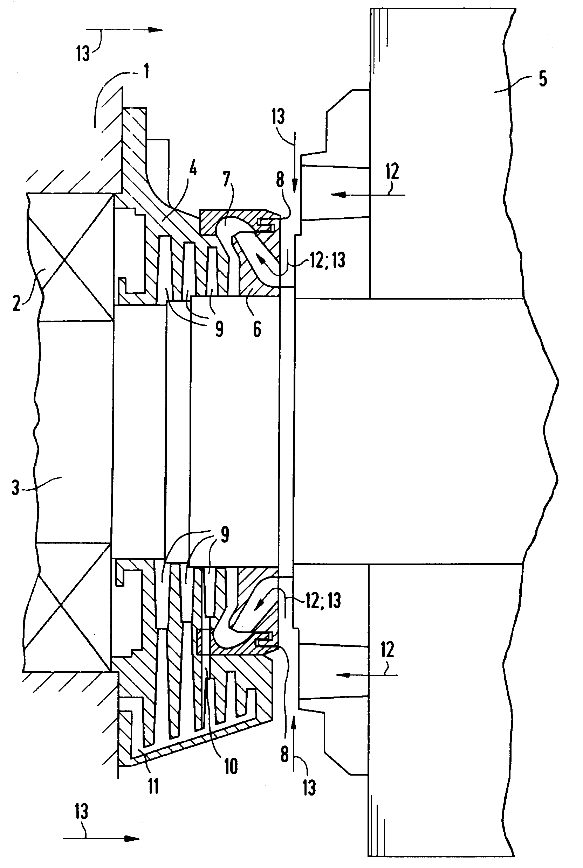

Weitere Vorteile und Einzelheiten der Erfindung ergeben sich aus der Beschreibung eines Ausführungsbeispiels anhand der Zeichnung und in Verbindung mit den weiteren Ansprüchen, die jeweils Gegenstand von vorteilhaften Ausgestaltungen der Erfindung sind.

In der Zeichnung ist ein Teillängsschnitt durch einen elektrischen Fahrmotor im Bereich seines antriebsseitigen Lagerschildes gezeigt.

Im antriebsseitigen Lagerschild 1 ist ein ölgeschmiertes Wellenlager 2 angeordnet. Im Wellenlager 2 ist eine in ein Getriebegehäuse ragende Welle 3 drehbar gelagert. Das Getriebegehäuse ist in der Zeichnung nicht sichtbar, es ist links vom Wellenlager 2 am Lagerschild 1 auf bekannte Weise befestigt.

Das Getriebegehäuse ist über Dichtungssysteme nach außen abgedichtet. Um zu vermeiden, daß der Dunst des Schmieröls für das Getriebe aus dem Getriebegehäuse in den Fahrmotor eindringt, ist das ölgeschmierte Wellenlager 2 auf der dem Getriebegehäuse abgewandten Seite durch eine Dichtungsanordnung 4 abgedichtet. Die Dichtungsanordnung 4 ist im gezeigten Ausführungsbeispiel als Labyrinthdichtung ausgebildet und an der dem Rotor 5 des Fahrmotors zugewandten Seite des antriebsseitigen Lagerschildes 1 verdrehsicher befestigt.

An der dem Getriebegehäuse abgewandten Seite der Labyrinthdichtung 4 ist ein Gegendrucklüfter 6 verdrehfest auf der Welle 3 gehalten. Weiterhin weist die Labyrinthdichtung 4 einen mit dem Gegendrucklüfter 6 korrespondierenden Strömungskanal 7 auf.

Der Strömungskanal 7 erstreckt sich in Umfangsrichtung der Welle 3 und ist im gezeigten Ausführungsbeispiel in dem Labyrinthdichtung 4 verdrehfest gehalten. Die Labyrinthdichtung 4 und der Strömungskanal 7 können jedoch auch einstückig gefertigt sein, um dadurch Montagekosten zu sparen.

Der stationäre Strömungskanal 7 und der rotierende Gegendrucklüfter 6 sind über ein Axiallabyrinth 8 miteinander verzahnt.

Bei drehender Welle 3 entsteht durch die von der Welle 3 angetriebenen Getriebezahnräder im Getriebekasten ein Überdruck, der dazu führt, daß Öldunst aus dem Getriebekasten und Öl aus dem ölgeschmierten Wellenlager 2 axial in Richtung des Rotors 5 gedrückt wird. Durch die Labyrinthdichtung 4 wird das Wellenlager 2 gegenüber dem Innenraum des Fahrmotors abgedichtet.

Der im Getriebe herrschende Überdruck ist drehzahlabhängig. Mit steigender Drehzahl der Getriebezahnräder steigt der Überdruck im Getriebegehäuse, der über das Wellenlager 2 austritt.

Durch den erfindungsgemäß vorgesehenen Gegendrucklüfter 6 und den damit korrespondierenden Strömungskanal 7 wird ein Staudruck erzeugt, der dem Überdruck im Getriebegehäuse entgegengerichtet ist und der ebenfalls mit steigender Motordrehzahl zunimmt. Dadurch ist sichergestellt, daß der über das Wellenlager 2 aus dem Getriebegehäuse austretende Überdruck nur geringe Ölmengen in die Labyrinthdichtung 4 fördert. Das in die Labyrinthdichtung 4 geförderte Öl sammelt sich in ringnutförmigen Labyrinthkammern 9 und läuft über Ablaufbohrungen 10 in einen siphonartigen Flüssigkeitssammelabschnitt 11.

Da der vom Gegendrucklüfter 6 erzeugte Staudruck die gleiche Drehzahlabhängigkeit wie der aus dem Getriebegehäuse austretende Überdruck aufweist, kann durch den Gegendrucklüfter 6 und den korrespondierenden Strömungskanal 7 unter allen Betriebsbedingungen eine verbesserte, insbes. von einer Fremdluftzufuhr (Pfeil 12) unabhängige Abdichtung des ölgeschmierten Wellenlagers 2 erreicht werden, da vom Gegendrucklüfter 6 immer Außenluft (Pfeil 13) angesaugt wird.

Die für die Abdichtung eines Getriebegehäuses beschriebene Erfindung kann auch für die Abdichtung anderer flüssigkeitsdunstgefüllter geschlossener Räume gegen in sie einseitig ragende oder in durchdringende rotierende Teile nach außen oder in benachbarte geschlossene Räume mit gleichem Vorteil verwendet werden. Die Dichtungsanordnung muß auch nicht notwendigerweise als Labyrinthdichtung ausgebildet sein, es sind vielmehr auch Dichtungsanordnungen denkbar, die aus einer Kombination verschiedender Dichtungen, z.B. Labyrinthdichtung und Lippendichtung, bestehen.

## Patentansprüche

1. Wellenabdichtungssystem für ein ölgeschmiertes Wellenlager (2) in einem nach außen abgeschlossenen, von Flüssigkeitsdunst erfüllten ruhenden Gehäuse, wobei in dem Wellenlager (2), das durch eine Dichtungsanordnung (4) abgedichtet ist, eine in das Gehäuse ragende Welle (3) drehbar gelagert ist, **gekennzeichnet** durch folgende Merkmale:
a) an der dem Gehäuse abgewandten Seite der Dichtungsanordnung (4) ist ein Gegendrucklüfter (6), der durch Ansaugen von Außenluft einen gegen die Dichtungsanordnung (4) gerichteten Staudruck erzeugt, verdrehfest auf der Welle gehalten,
b) die Dichtungsanordnung (4) weist einen mit dem Gegendrucklüfter (6) korrespondierenden Strömungskanal (7) auf.

2. Wellenabdichtungssystem nach Anspruch 1,
**dadurch gekennzeichnet,**
daß die Dichtungsanordnung (4) als Labyrinthdichtung ausgebildet ist.

3. Wellenabdichtungssystem nach Anspruch 1,
**dadurch gekennzeichnet,**
daß die Dichtungsanordnung (4) gegenüber der rotierenden Welle (3) feststehend angeordnet ist.

4. Wellenabdichtungssystem nach Anspruch 1,
**dadurch gekennzeichnet,**
daß der Strömungskanal (7) sich in Umfangsrichtung der Welle (3) erstreckt.

5. Wellenabdichtungssystem nach Anspruch 1,
**dadurch gekennzeichnet,**
daß der mit dem Gegendrucklüfter (6) korrespondierende Strömungskanal (7) in einem feststehenden Teil der Dichtungsanordnung (4) angeordnet ist.

6. Wellenabdichtungssystem nach Anspruch 5,
**dadurch gekennzeichnet,**
daß der Strömungskanal (7) einstückig an die Dichtungsanordnung (4) angeformt ist.

7. Wellenabdichtungssystem nach Anspruch 4,
**dadurch gekennzeichnet,**
daß der Gegendrucklüfter (6) und der Strömungskanal (7) über ein Axiallabyrinth (8) miteinander verzahnt sind.
